(19) Europäisches Patentamt
European Patent Office
Office européen des brevets

(11) Veröffentlichungsnummer: **0 022 088**
**B1**

(12) # EUROPÄISCHE PATENTSCHRIFT

(45) Veröffentlichungstag der Patentschrift: **23.11.83**

(21) Anmeldenummer: **80810210.7**

(22) Anmeldetag: **23.06.80**

(51) Int. Cl.³: **C 08 F 8/44,** C 08 G 85/00, A 01 N 25/10, A 01 N 37/52, C 08 F 12/30, C 08 F 28/02, C 08 F 20/60

(54) **Salze von Sulfonsäuregruppen enthaltenden Polymeren und ihre Verwendung als Schädlingsbekämpfungsmittel.**

(30) Priorität: **29.06.79 CH 6095/79**
**23.05.80 CH 4053/80**

(43) Veröffentlichungstag der Anmeldung: **07.01.81 Patentblatt 81/1**

(45) Bekanntmachung des Hinweises auf die Patenterteilung: **23.11.83 Patentblatt 83/47**

(84) Benannte Vertragsstaaten: **AT BE CH DE FR GB IT LI NL**

(56) Entgegenhaltungen: **FR - A - 2 285 074**

(73) Patentinhaber: **CIBA-GEIGY AG, Patentabteilung Postfach, CH-4002 Basel (CH)**

(72) Erfinder: **d'Hondt, Christian, Dr., Unterm Schellenberg 162, CH-4125 Riehen (CH)**
Erfinder: **Lohmann, Dieter, Dr., Unterwartweg 49, CH-4132 Muttenz (CH)**
Erfinder: **Neuenschwander, Ernst, Dr., Moosweg 20, CH-4125 Riehen (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 022 088 B1

# Salze von Sulfonsäuregruppen enthaltenden Polymeren und ihre Verwendung in der Schädlingsbekämpfung

Die vorliegende Erfindung betrifft Salze von Formamidinen mit sulfonsäuregruppenhaltigen Polymeren, Verfahren zu ihrer Herstellung und ihre Verwendung in der Schädlingsbekämpfung.

Gegenstand der Erfindung sind Salze, gebildet aus einem der Kationen der Formeln

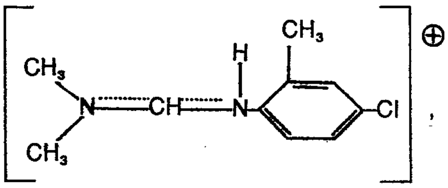
,

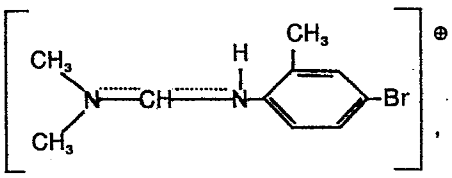
,

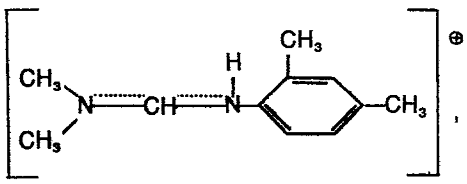
,

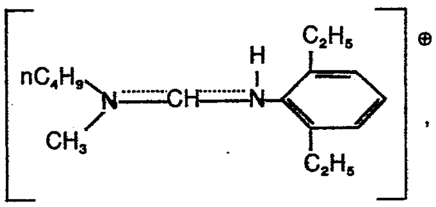
,

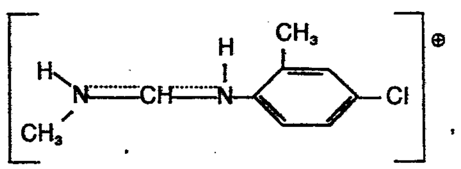
,

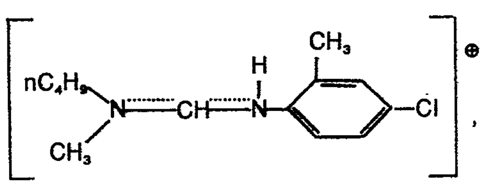
,

mit Anionen von Poly-Styrolsulfonsäuren, Poly-N-(Sulfoalkyl)-acrylamiden oder sulfonierten Kationenaustauschern aus Styrolsulfonsäure und 8–12 Gew.-% Divinylbenzol oder sulfonierten Kationenaustauschern mit makroporösen Strukturen.

Die Polymeren können linear, verzweigt oder vernetzt sein. Handelt es sich dabei um lineare Polymere, so weisen diese zweckmässig ein Durchschnittsmolekulargewicht von 500 bis 2 000 000, insbesondere von 1000 bis 200 000 auf. Die Bestimmung der Durchschnittsmolekulargewichte erfolgt nach an sich bekannten Methoden, im allgemeinen mittels Dampfdruckosmometrie, Lichtstreuung oder Viskositätsmessung.

Die erfindungsgemässen Salze lassen sich nach an sich bekannten Methoden herstellen (vgl. die Herstellungsbeispiele 1 bis 5).

Die Ausgangsmaterialien zur Herstellung von erfindungsgemässen Salzen sind bekannt und können nach bekannten Methoden hergestellt werden.

Die erfindungsgemässen Salze eignen sich zur Bekämpfung von verschiedenartigen Schädlingen an Tieren und Pflanzen.

Insbesondere eignen sie sich zur Bekämpfung aller Entwicklungsstadien wie Eier, Larven, Puppen und Adulte von Insekten, z.B. der Ordnung Lepidoptera, Coleoptera, Homoptera, Heteroptera, Diptera, Thysanoptera, Orthoptera, Anoplura, Siphonaptera, Mallophaga, Thysanura, Isoptera, Psocoptera und Hymenoptera und von Milben und Zecken der Ordnung Acarina.

Vor allem eignen sich die erfindungsgemässen Salze zur Bekämpfung von pflanzenschädigenden Insekten, insbesondere pflanzenschädigenden Frassinsekten, in Zier- und Nutzpflanzen, insbesondere in Baumwollkulturen (z.B. gegen Spodoptera littoralis und Heliothis virescens) und Gemüsekulturen (z.B. gegen Leptinotarsa decemlineata und Myzus persicae) sowie zur Bekämpfung der parasitären Bienenmilben Varroa jacobsonii und Acarapis woodi.

Überraschenderweise haben die erfindungsgemässen Salze eine bessere Stabilität als analoge, aus der britischen Patentschrift Nr. 1 394 990 und der französischen Patentschrift Nr. 2 285 074 bekannte Salze. Sie sind auch sicherer in der Anwendung als die freien Basen.

Die erfindungsgemässen Salze können für sich allein oder zusammen mit geeigneten Träger- und/oder Zuschlagstoffen eingesetzt werden. Geeignete Zuschlagstoffe können fest oder flüssig sein und entsprechen den in der Formulierungstechnik üblichen Stoffen wie z.B. natürlichen oder regenerierten Stoffen, Lösungs-, Dispergier-, Netz-, Haft-, Verdickungs-, Binde- und/oder Düngemitteln.

Die Herstellung erfindungsgemässer Mittel erfolgt in an sich bekannter Weise durch inniges Vermischen und/oder Vermahlen der erfindungsgemässen Salze mit den geeigneten Formulierungshilfsmitteln, gegebenenfalls unter Zusatz von gegenüber den erfindungsgemässen Salzen inerten Dispergier- oder Lösungsmitteln.

Beispiel 1

Herstellung von Polystyrolsulfonsäure und Umsetzung mit Chlordimeform zum Salz.

Nach der von P. Schneider beschriebenen Methode (Houben-Weyl, Methoden der organischen

Chemie, Bd. 14/1, S. 683) werden 107 g Polystyrol ($\bar{M}_w$ = ca. 200 000) in 650 ml Dichlormethan gelöst und bei 0°C unter Kühlung mit Trockeneis/Äthanol langsam unter starkem Rühren mit einer Lösung von 100 g festem Schwefeltrioxid in 1350 ml Dichlormethan versetzt. Die erhaltene Suspension von sulfoniertem Polystyrol wird 43 Stunden bei 0°C nachgerührt, filtriert und mit trokkenem Diäthyläther sorgfältig nachgewaschen. Das weisse pulverige, hygroskopische Produkt wird im Hochvakuum getrocknet. Es enthält 16,5 Gew.-% Schwefel.

In eine Lösung von 90 g Chlordimeform in 1000 ml Chloroform werden langsam 100 g der erhaltenen Polystyrolsulfonsäure eingetragen. Nach dem Abklingen der exothermen Reaktion wird noch 24 Stunden bei Raumtemperatur nachgerührt. Das Produkt wird filtriert und mit trokkenem Diäthyläther nachgewaschen, bis kein unumgesetztes Chlordimeform mehr nachweisbar ist. Nach dem Trocknen im Hochvakuum wird ein pulveriges weisses Produkt vom Erweichungspunkt ca. 194°C erhalten, das 5,8 Gew.-% Stickstoff und 7,9 Gew.-% Schwefel enthält. Der Gehalt an Chlordimeform beträgt ca. 41 Gew.-%.

Beispiel 2

Um ein wasserfreies System zu erhalten, wird ein Kationenaustauscher, der durch Polymerisation von Styrol unter gleichzeitiger Vernetzung mit 8 Gew.-% Divinylbenzol und anschliessende Sulfonierung hergestellt wird [«Dowex HCR-S®» der Fa. Dow Chemical] gemahlen und bei 90°C im Vakuum getrocknet. Die Austauschkapazität des Ionenaustauschers beträgt 4,7 mÄq.-$SO_3H$/g.

Man löst nun 150 g Chlordimeform in 561 g Dieselöl und trägt 165 g des getrockneten und gemahlenen Kationenaustauschers portionenweise in diese Lösung ein. Zur erhaltenen Suspension werden innerhalb 15 Minuten 24 g Methanol zugetropft. Dabei setzt eine exotherme Reaktion ein. Das Reaktionsgemisch wird unter ständigem Rühren während 3 Stunden auf 50°C gehalten. Nach dieser Zeit enthält die flüssige Phase kein Chlordimeform mehr.

Zur Stabilisierung der Suspension werden noch 100 g Oleylpolyglykoläther und 10 g Bentone eingerührt. Die erhaltene stabile Suspension enthält pro Liter 150 g Chlordimeform.

Beispiel 3

Ein Kationenaustauschharz, hergestellt durch Polymerisation von Styrol in Gegenwart von 8 Gew.-% Divinylbenzol und anschliessende Sulfonierung [«Amberlyst 15®» der Fa. Röhm + Haas) mit einer Austauschkapazität von 2,9 val/l, einer Korngrösse von 0,3–1,2 mm und makroretikulärer Struktur wird vor dem Beladen durch mehrmaliges Vermischen mit Dioxan und Abfiltrieren weitgehend von Restwasser befreit (Feuchtigkeitsgehalt < 1 Gew.-%). Anschliessend werden zu 5 g des Kationenaustauschharzes und 5,86 g Dioxan 5 g (0,025 Mol) Chlordimeform, gelöst in 4,14 Dioxan, zugegeben. Das Reaktionsgemisch wird unter Rühren auf 60°C erhitzt. Nach einer Stunde wird eine kleine Menge der überstehenden Lösung zwecks Analyse des Werkstoffes durch Gaschromatographie entnommen. Nach 8 Stunden wird die Heizung abgestellt. 24 Stunden nach Beginn des Beladungsprozesses wird eine zweite Probe für die Analyse entnommen. Die totale Reaktionszeit beträgt 31 Stunden. Das Reaktionsgemisch wird mittels eines Büchner-Trichters filtriert und viermal mit je 50 ml Aceton gewaschen. Anschliessend wird das mit Chlordimeform beladene Ionenaustauschharz bei Raumtemperatur bis zur Gewichtskonstanz getrocknet. Der Gehalt des beladenen Ionenaustauschharzes an Chlordimeform wird aus dem Konzentrationsabfall in der überstehenden Lösung berechnet. Die Anfangskonzentration der Lösung beträgt 33,3 Gew.-% (5 g Chlordimeform in 10 g Dioxan). Nach einer Stunde Reaktionszeit beträgt die Konzentration 23,8 Gew.-%, nach einem Tag 18,7 Gew.-%. Daraus ergibt sich ein errechneter Gehalt des beladenen Ionenaustauschers an Chlordimeform von 35 Gew.-%. Zur Bestätigung dieses Wertes wird eine Chlor- und Stickstoffelementaranalyse durchgeführt

| | | |
|---|---|---|
| berechnet: | Cl 6,3% | N 4,9% |
| gefunden: | Cl 6,4% (Mittel aus 6,2 und 6,6%) | N 5,2% (Mittel aus 5,3 und 5,1%). |

Aus dem Stickstoffgehalt ergibt sich ein berechneter Wert von 36,5 Gew.-% Chlordimeform, aus dem Chlorgehalt ein berechneter Wert von 35,5 Gew.-% Chlordimeform, was sehr gut mit dem erwarteten (theoretischen) Wert von 35 Gew.-% übereinstimmt.

Anschliessend werden die mit Chlordimeform beladenen Ionenaustauscher-Kügelchen zu einem feinen Pulver vermahlen. Der Chlordimeform-Gehalt des beladenen Ionenaustauschers wird nach einer weiteren Methode wie folgt überprüft:

10 ml Chloroform, die 0,25 Gew.-% Eicosan als internen Standard für die gaschromatographische Analyse und 0,5 ml Diäthylamin enthalten, werden zu 150 mg des mit Chlordimeform beladenen Ionenaustauschers gegeben. Dadurch soll das Chlordimeform auf dem Ionenaustauscher durch die stärkere Base Diäthylamin ausgetauscht und der Gehalt an freigesetztem Chlordimeform nach dem Gaschromatogramm gemessen werden. Nach einem Tag Reaktionszeit wird eine Probe der Chloroformlösung auf den Chlordimeformgehalt im Vergleich zu einer Standardlösung von 50 ml Chlordimeform in 10 ml Chloroform, die 0,25 Gew.-% Eicosan als internen Standard für die gaschromatographische Analyse enthalten, untersucht. Aus dieser Analyse ergibt sich ein berechneter Gehalt von Chlordimeform auf dem Ionenaustauscher von 34 Gew.-%. Dieser Wert ist in guter Übereinstimmung sowohl mit dem durch Elementaranalyse ermittelten Wert als auch mit dem Wert, der sich aus dem Konzentrationsabfall während des Beladens des Harzes ergibt (35%).

Auf analoge Weise wurde ein Kationenaustauschharz, hergestellt durch Polymerisation von Styrol in Gegenwart von 8% Divinylbenzol und anschliessende Sulfonierung mit folgenden Wirkstoffen beladen:

Verbindung
No.

I $N^1$-Methyl-$N^2$-(4-chloro-o-tolyl)-formamidin
II $N^1N^1$-Dimethyl-$N^2$-(4-brom-o-tolyl)-formamidin
III $N^1$-Methyl-$N^1$-n-butyl-$N^2$-(4-chlor-o-tolyl)-formamidin
IV $N^1$-Methyl-$N^1$-n-butyl-$N^2$-(2,6-diäthylphenyl)-formamidin
V $N^1N^1$-Dimethyl-$N^2$-(2,4-dimethylphenyl)-formamidin.

Die Ergebnisse sind in der folgenden Tabelle I zusammengefasst.

Tabelle I

| Verbindung No. | Anfangskonzentration der Lösung Gew.-% | Konzentration der Lösung nach 1 h, Gew.-% | Konzentration der Lösung nach 1 Tag Gew.-% | berechnete Beladung Gew.-% | Beladung gemäss Elementaranalyse Gew.-% | Beladung nach Austausch mit Diäthylamin Gew.-% |
|---|---|---|---|---|---|---|
| I | 31,5 | 20,6 | 19 | 31 | 29,5 | 32 |
| II | 37,9 | 25,2 | 23 | 38,3 | 35,1 | 37 |
| III | 37,5 | 26,6 | 26,6 | 32,5 | 34,1 | 33 |
| IV | 38,3 | 31 | 27,5 | 32,5 | 33,9 | 32,5 |
| V | 30,5 | 16,8 | 15,7 | 33,7 | 32,4 | 33 |

Beispiel 4

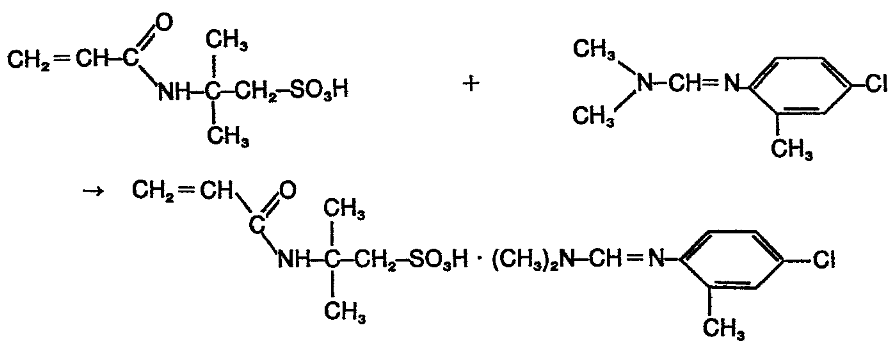

Monomeres Salz aus Chlordimeform und 2-Acrylamido-2-methylpropansulfonsäure

Bei Raumtemperatur wird zu einer Suspension von 20,7 g = 0,1 Mol 2-Acrylamido-2-methylpropansulfonsäure in 400 ml Methanol eine Lösung von 19,6 g = 0,1 Mol Chlordimeform in 250 ml Methanol innerhalb von 45 Minuten langsam zugetropft. Nach Abklingen der leicht exothermen Reaktion wird noch 6 Stunden bei Raumtemperatur nachgerührt. Die erhaltene klare Lösung des Chlordimeform-Salzes wird am Rotationsverdampfer eingedampft und der Rückstand mit 500 ml trockenem Äther verrührt. Die erhaltene weisse Suspension wird filtriert und der Rückstand nochmals mit 200 ml trockenem Äther behandelt. Nach dem Filtrieren und anschliessendem Trocknen im Hochvakuum wird das Salz als weisses kristallines Festprodukt erhalten, das sich beim Schmelzen im Bereich von 110–114 °C langsam zersetzt.

Ausbeute: 39,4 g = 97,7% der Theorie

Summenformel: $C_{17}H_{26}N_3O_4S$ Cl

Ber. C 50,55 H 6,49 N 10,40 S 7,94 Cl 8,78%
Gef. C 50,18 H 6,24 N 10,45 S 7,93 Cl 8,86%

Beispiel 5

Polymerisation des Monomersalzes aus Chlordimeform und 2-Acrylamido-2-methyl-propansulfonsäure

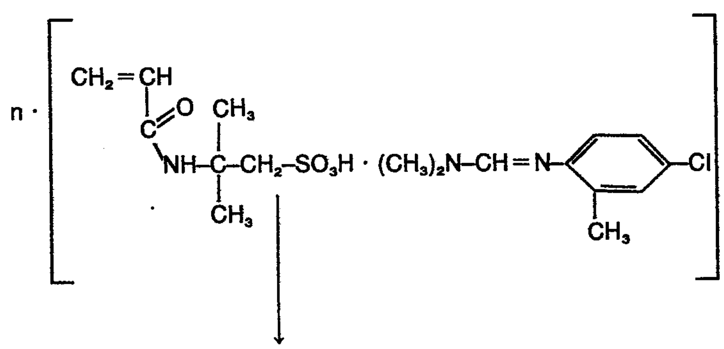

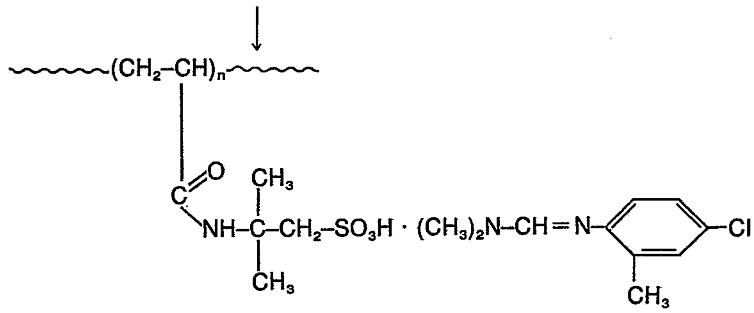

mit Azo-isobutyronitril in N,N-Dimethylacetamid (DMA).

a) 2 g = 0,01 Mol Chlordimeform werden in 10 ml trockenem DMA gelöst und mit einer Lösung von 2,07 g = 0,01 Mol 2-Acrylamido-2-methylpropansulfonsäure in 10 ml trockenem DMA versetzt. Die entstandene Lösung des Chlordimeformsalzes wird 6 Stunden bei Raumtemperatur unter Durchleiten von trockenem Stickstoff gerührt und anschliessend unter Zusatz von 40 mg Azo-Isobutyronitril (AiBN) bei 55–60 °C während 15 Stunden polymerisiert. Das entstandene Polymere wird durch Ausfällen der Reaktionslösung in 300 ml trockenem Diäthyläther isoliert. Nach Filtration, Waschen mit 3 × 50 ml trockenem Äther und Trocknen im Hochvakuum erhält man 3,8 g weisses pulveriges Material, das sich beim Schmelzen oberhalb von 100 °C langsam zersetzt.

Ausbeute: 94% der Theorie.

Elementaranalyse:

Ber. C 50,5 H 6,5 N 10,4 S 7,9 Cl 8,8%

Gef. C 49,8 H 6,7 N 10,4 S 7,5 Cl 8,3%.

Das H-NMR-Spektrum des Produktes in DMSO-$d_6$ zeigt nicht mehr die für das Monomersalz charakteristischen Multipletts im Bereich von 5,3–6,1 ppm.

b) Analog werden 4,03 g = 0,01 Mol des gemäss Beispiel 4 hergestellten Monomersalzes in 20 ml trockenem DMA gelöst und unter $N_2$ bei 55–60 °C mit Azo-Isobutyronitril polymerisiert. Das erhaltene Produkt entspricht in Struktur und Zusammensetzung dem unter a) hergestellten Polymeren.

Beispiel 6

A) Insektizide Frassgift-Wirkung

Baumwollpflanzen werden mit einer, bezogen auf den Wirkstoff, 0,02%igen wässrigen Suspension (erhalten aus einem 25%igen Spritzpulver bzw. einer 20%igen Suspension) besprüht.

Nach dem Antrocknen des Belages werden die Baumwollpflanzen je mit Spodoptera littoralis Larven $L_1$ besetzt. Der Versuch wird bei 30–35 °C und 60% relativer Luftfeuchtigkeit durchgeführt.

Verbindungen gemäss den Beispielen 1–5 zeigen im obigen Test eine gute insektizide Frassgift-Wirkung gegen Spodoptera-Larven.

Beispiel 7

Akarizide Wirkung

Phaseolus vulgaris Pflanzen werden 12 Stunden vor dem Test auf akarizide Wirkung mit einem infestierten Blattstück aus einer Massenzucht von Tetranychus urticae belegt. Die übergelaufenen beweglichen Stadien werden aus einem Chromatographiezerstäuber mit den suspendierten Testpräparaten derart besprüht, dass kein Ablaufen der Spritzbrühe eintritt. Nach 2 und 7 Tagen werden Larven, Adulte und Eier unter dem Binokular auf lebende und tote Individuen ausgewertet und das Ergebnis in Prozenten ausgedrückt. Während der «Haltezeit» stehen die behandelten Pflanzen in Gewächshauskabinen bei 25 °C.

Verbindungen gemäss den Beispielen 1–5 wirken im obigen Test gegen Adulte, Larven und Eier von Tetranycus urticae.

**Patentansprüche**

1. Ein Salz, gebildet aus einem der Kationen der Formeln

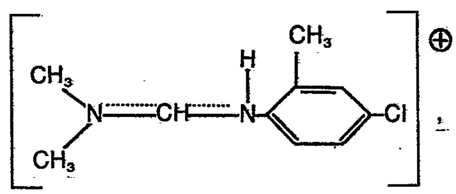

,

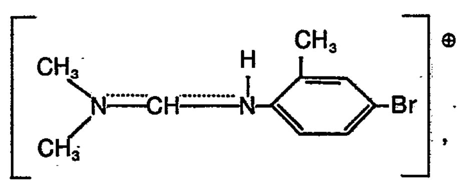

,

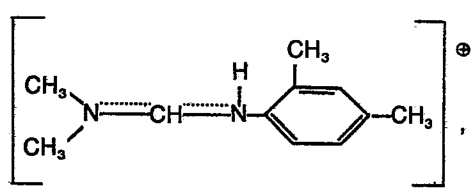

,

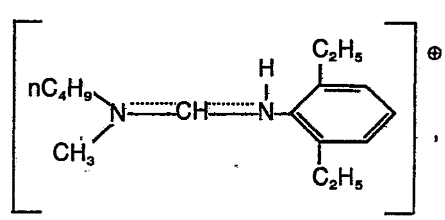

,

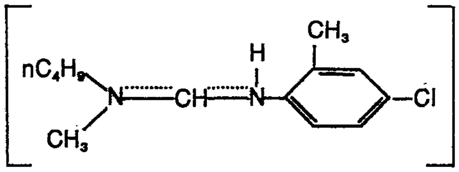
,

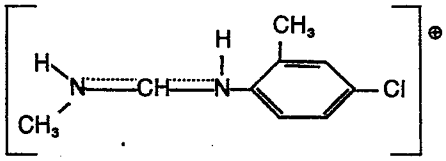

mit Anionen von Poly-Styrolsulfonsäuren, Poly-N-(Sulfoalkyl)-acrylamiden, sulfonierten Kationenaustauschern aus Styrolsulfonsäure und 8–12 Gew.-% Divinyl-benzol oder sulfonierten Kationenaustauschern mit makroporösen Strukturen.

2. Ein Salz gemäss Anspruch 1, gebildet aus dem Kation der Formel

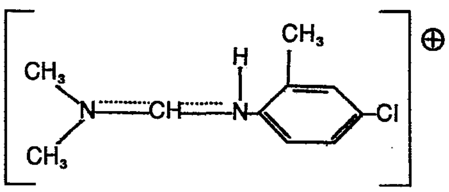

mit dem Anion des sulfonierten Kationenaustauschers aus Styrolsulfonsäure und 8–12 Gew.-% Divinylbenzol.

3. Ein Schädlingsbekämpfungsmittel, welches als aktive Komponente ein Salz gemäss Anspruch 1 und geeignete Träger- und/oder andere Zuschlagstoffe enthält.

4. Verwendung eines Salzes gemäss Anspruch 1 zur Bekämpfung von Insekten und Vertretern der Ordnung Akarina.

**Claims**

1. A salt formed from one of the cations of the formulae

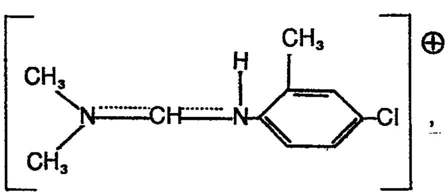
,

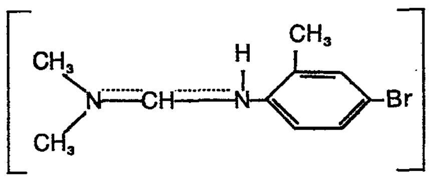
,

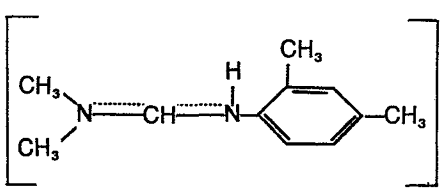
,

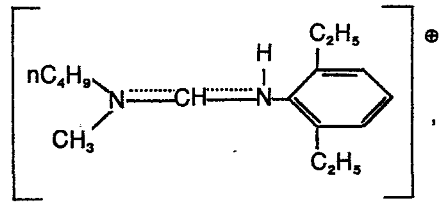
,

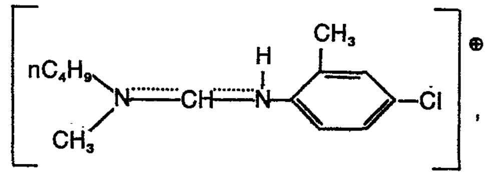
,

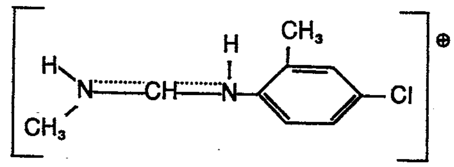

with anions of polystyrenesulfonic acids, poly-N-(sulfo-alkyl)-acrylamides, sulfonated cation exchangers formed from styrenesulfonic acid and 8–12% by weight of divinyl benzene, or sulfonated cation exchangers having macroporous structures.

2. A salt according to Claim 1 formed from the cation of the formula

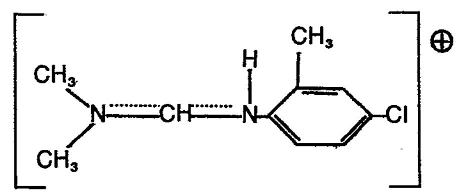

with the anion of the sulfonated cation exchanger formed from styrenesulfonic acid and 8–12% by weight of divinyl benzene.

3. A pesticidal composition containing as active ingredient a salt according to Claim 1, together with suitable carriers and/or other additives.

4. A method of combating insects, and members of the order Acarina at a locus, which method comprises applying to the locus a salt according to Claim 1.

**Revendications**

1. Sel formé à partir d'un des cations de formules:

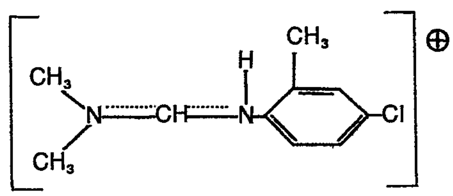

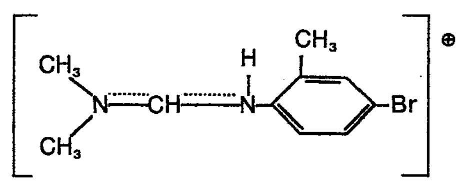

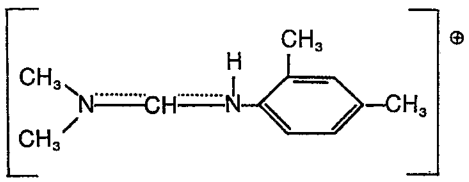

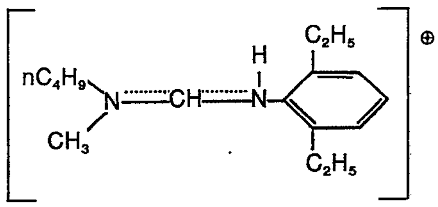

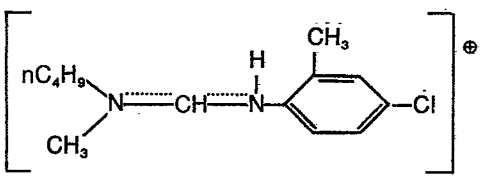

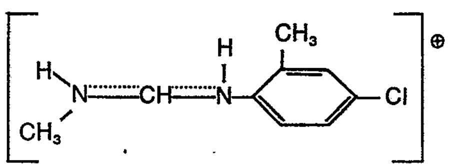

avec des anions d'acides poly-styrènesulfoniques, de poly-N-(sulfoalcoyl)-acrylamides, d'échangeurs de cations sulfonés à partir d'acide styrène-sulfonique et de divinylbenzène à 8 à 12% en poids ou d'échangeurs de cations sulfonés à structure macroporeuse.

2. Sel selon la revendication 1 formé à partir des cations de formule:

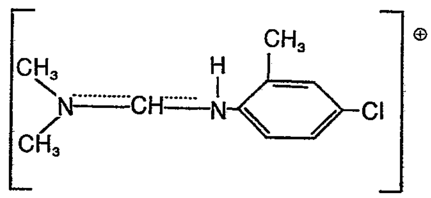

avec l'anion de l'échangeur de cations sulfoné à partir d'acide styrènesulfonique et de divinylbenzène à 8 à 12% en poids.

3. Agent de lutte antiparasitaire contenant comme composant actif un sel selon la revendication 1 et des supports et/ou autres additifs appropriés.

4. Application d'un sel selon la revendication 1 à la lutte contre les insectes et les représentants de l'ordre des acariens.